# EUROPÄISCHE PATENTSCHRIFT

(11) **EP 1 636 070 B1**
(45) Veröffentlichungstag und Bekanntmachung des Hinweises auf die Patenterteilung: **28.03.2007**
(21) Anmeldenummer: 04721109.9
(22) Anmeldetag: 17.03.2004
(51) Int. Cl.: B60R 21/01

(54) **VORRICHTUNG ZUR BESTIMMUNG EINER RELATIVGESCHWINDIGKEIT ZWISCHEN EINEM FAHRZEUG UND EINEM AUFPRALLOBJEKT**
DEVICE FOR DETERMINING A RELATIVE SPEED BETWEEN A VEHICLE AND AN IMPACT OBJECT
DISPOSITIF PERMETTANT DE DETERMINER UNE VITESSE RELATIVE ENTRE UN VEHICULE ET UN OBJET DE COLLISION

(30) Priorität: 23.05.2003 DE 10323483
(43) Veröffentlichungstag der Anmeldung: 22.03.2006
(73) Patentinhaber: ROBERT BOSCH GMBH, 70442 Stuttgart (DE)
(72) Erfinder: KUTTENBERGER, Alfred, 71696 Moeglingen (DE); THEISEN, Marc, 74354 Besigheim (DE); BUNSE, Michael, 71665 Vaihingen/Enz (DE)
(86) Internationale Anmeldenummer: PCT/DE2004/000534
(87) Internationale Veröffentlichungsnummer: WO 2004/110822

(56) Entgegenhaltungen:
- EP-A- 0 950 583
- DE-A- 10 141 886
- DE-A- 19 957 187
- DE-C- 10 140 119

## Beschreibung

### Stand der Technik

Die Erfindung geht aus von einer Vorrichtung zur Bestimmung einer Relativgeschwindigkeit zwischen einem Fahrzeug und einem Aufprallobjekt nach der Gattung des unabhängigen Patentanspruchs.

Aus DE 198 17 334 C1 ist ein Verfahren zur Anpassung einer Auslöseschwelle von Insassenschutzeinrichtungen bekannt. Dabei wird die Auslöseschwelle in Abhängigkeit vom Pre-Crash-Signal und einem Aufprallsignal abgesenkt. Als Aufprallsensor wird ein faseroptischer Belastungssensor vorgeschlagen, der an wenigstens einer für Unfallsituationen typischen Aufprallfläche vorgesehen ist und bei Krafteinwirkung auf die Lichtfaseranordnung zu einer Veränderung der am Lichtaustrittsende von einem Lichtmesser zu messenden Lichtleistung führt, in dessen Abhängigkeit das Aufprallsignal gesendet wird. Das Aufprallsignal wird mit dem Pre-Crash-Signal logisch verknüpft, beispielsweise in einem Und-Gatter, um die Absenkung der Auslöseschwelle, die aufgrund des Signals des Beschleunigungssensors erfolgt, zu ermöglichen.

Aus der gattungsgemäßen DE 10140119 C1 ist es bekannt, in Abhängigkeit von einem Signal eines Precrash-Sensors eine Rauschwelle für einen Auslösealgorithmus abzusenken. Eine Crash-Schwere wird aus einem Signal eines Aufprallsensors und einem Signal eines Precrash-Sensors bestimmt. Damit ist es dann gegeben, wie und welche Personenschutzmittel anzusteuern sind. Die Precrash-Sensorik liefert lediglich die Aufprallgeschwindigkeit und den Aufprallzeitpunkt. DE 10141886 A1 zeigt die Bestimmung eines Crashtyps aus der Steigung des Geschwindigkeitsabbaus in zwei aufeinander folgenden Zeitfenstern und der Lage der Zeitfenster und der Aufprallgeschwindigkeit sowie der Aufprallzeit.

### Vorteile der Erfindung

Die erfindungsgemäße Vorrichtung zur Bestimmung einer Relativgeschwindigkeit zwischen einem Fahrzeug und einem Aufprallobjekt mit den Merkmalen des unabhängigen Patentanspruchs hat demgegenüber den Vorteil, dass nunmehr die Relativgeschwindigkeit zwischen dem Aufprallobjekt und dem Fahrzeug nicht allein mit den Signalen des Pre-Crash-Sensors bestimmt wird, sondern auch mit dem Signal eines Kontaktsensors. Insbesondere in der letzten Phase eines Unfalls kann es zu erheblichen Bremsvorgängen kommen, so dass die Relativgeschwindigkeit, die der Pre-Crash-Sensor allein bestimmt hat, eine Überschätzung darstellen könnte. Dies wird durch das Signal des Kontaktsensors korrigiert, in dem nun auch dieses Signal zur Bestimmung der Relativgeschwindigkeit herangezogen wird. Die Umfeldsensorik oder Pre-Crash-Sensorik kann mit verschiedenen Umfeldsensortypen konfiguriert sein. Durch die Bestimmung der Relativgeschwindigkeit kann dann ein entsprechender Einsatz von Rückhaltemitteln oder einer Aktuatorik im allgemeinen vorgesehen sein, da die Relativgeschwindigkeit die Unfallschwere entscheidend bestimmt. Insbesondere kann bei Verwendung eines Ultraschallsensors als Umfeldsensor der Geschwindigkeitsbereich durch den Kontaktsensor erweitert werden. Aber auch bei Radarsensoren, wie mit den sogenannten Long-Range-Radarsensoren (z. B. bei 77 GHz), kann es insbesondere bei niedrigen Geschwindigkeiten durch Bremsen oder Beschleunigen im Bereich von 0 bis 2 Meter vor dem Fahrzeug zu großen Änderungen der durch den Radarsensor gemessenen Geschwindigkeit kommen. Durch diese Unsicherheit der vorhergesagten Aufprallgeschwindigkeit kann die Information über die Annäherungsgeschwindigkeit nur sehr eingeschränkt zur Steuerung der Auslösung von irreversiblen Rückhaltemitteln verwendet werden.

Mit Hilfe der Kontaktsensorik kann der genaue Kontaktzeitpunkt bestimmt werden. Besteht eine relevante Differenz zwischen dem vom Radarsensor prognostizierten Aufschlagzeitpunkt und dem vom Kontaktsensor gemessenen, so kann daraus geschlossen werden, dass das Objekt in dem Bereich, in dem der Radarsensor blind ist, beschleunigt beziehungsweise gebremst hat. Aus der Differenz zwischen dem geschätzten und gemessenen Aufschlagzeitpunkt kann die Geschwindigkeitsschätzung dann korrigiert werden und Airbagauslösung bzw. Gurtstrafferauslösung unter Ausnutzung der Aufprallgeschwindigkeit optimiert werden. Dabei kann dann auch entsprechend vorgesehen sein, dass die Auslöseschwellen für die Rückhaltemittel verändert werden. Aber auch eine Veränderung des Auslösesignals ist hier möglich. Bei der Kombination von Ultraschallsensoren mit einem Kontaktsensor ist die Situation eine andere. So liegt zur Zeit die obere Messgrenze für eine Geschwindigkeitsmessung allein mit Ultraschallsensoren bei ca. 40 km/h. Bewegt sich ein Objekt schneller auf das Fahrzeug zu, so ist es möglich, dass der Ultraschallsensor nicht genügend Messpunkte erfassen kann, um eine Geschwindigkeit zu berechnen. Sind beispielsweise aufgrund hoher Geschwindigkeit oder geringer Sensorgüte des Ultraschallsensors nur 2 oder 3 Abstandspunkte des Objekts bekannt, so kann aus der Abstandsinformation und den mit dem Kontaktsensor gemessenen Kontaktzeitpunkt die Geschwindigkeit berechnet werden. Diese wird dann im Airbagauslösealgorithmus verwendet. Somit lässt sich auch eine Geschwindigkeitsinformation für höhere Geschwindigkeiten, beispielsweise für Bereiche von über 40 km/h, gewinnen, in denen der Ultraschallsensor allein nicht mehr aussagekräftige Daten liefern kann.

Auch eine Kombination des Radarsensors des Ultraschallsensors und des Kontaktsensors kann im Fahrzeug eingebaut sein. Die Kombination führt ebenfalls zu einer Erweiterung des Erfassungsbereichs. Darüber hinaus kann auch eine Übergabe des Objekts von einem Sensorsystem in das nächste bewerkstelligt werden, wodurch beispielsweise die Plausibilisierung des Objekts erleichtert wird. Mit der Information kann sowohl die Rückhaltemittelauslösung wie auch die Aktivierung von reversiblen Rückhaltemitteln verbessert werden. Zusätzlich kann die Information der Umfeldsensorik genutzt werden, um die Fußgängersensierung zu verbessern. Dies ist beispielsweise möglich durch ein Vorbereiten der Fußgängererkennung bzw. durch Einführung von Ausschlusskriterien, wenn z. B. die Geschwindigkeit des Objekts über der eines Fußgängers liegt.

Durch die in den abhängigen Ansprüchen aufgeführten Maßnahmen und Weiterbildungen sind weitere Verbesserungen der im unabhängigen Patentanspruch angegebenen Vorrichtung zur Bestimmung einer Relativgeschwindigkeit zwischen einem Fahrzeug und einem Aufprallobjekt möglich.

Besonders vorteilhaft ist, dass die Kontaktsensorik ein Piezokabel aufweist, das an der Fahrzeugaußenhaut angeordnet ist. Solch ein Piezokabel kann kapazitiv, piezoelektrisch und durch eine Widerstandsänderung bei Dehnung des Kabels auf einen Aufprall als Kontaktsensor reagieren. Es bietet somit inhärent verschiedene Messprinzipen und führt somit zu einem sehr zuverlässigen Kontaktsensor. Alternativ sind auch Schalter möglich, wie auch Kontaktbahnen, die beim Aufprall zusammengedrückt werden, so dass damit ein Kontakt mit einem Aufprallobjekt sehr sicher detektiert wird. Es sind jedoch auch andere Kontaktsensoren möglich. Hier sind beispielhaft in der Fahrzeugfront eingebaute beschleunigungsbasierte Sensoren zu erwähnen. Dies können beispielsweise UpfrontSensoren sein, die empfindlicher als die üblichen Crash-Sensoren kalibriert sind.

Weiterhin ist vorteilhaft, dass die Umfeldsensorik nicht nur einen Ultraschall- bzw. einen Radarsensor, sondern auch einen PMD-Sensor (Photo Mixer Device) umfassen kann. Bei diesem Sensor beleuchtet ein Sensor die Umgebung mit Licht und der Empfänger misst die Laufzeit, um somit ein dreidimensionales Bild zu errechnen.

### Zeichnung

Ausführungsbeispiele der Erfindung sind in der Zeichnung dargestellt und werden in der nachfolgenden Beschreibung näher erläutert.

Es zeigen
Figur 1 ein Blockschaltbild der erfindungsgemäßen Vorrichtung,
Figur 2 ein erstes Flussdiagramm und
Figur 3 ein zweites Flussdiagramm.

### Beschreibung

Radar- und Ultraschallsensoren als Umfeldsensorik wurden insbesondere für Komfortfunktionen wie Automatic Cruise Control oder Parking Aid entwickelt. Aber auch als Pre-Crash-Sensoren wurden solche Umfeldsensoren schon vorgeschlagen. Im Bereich des Fußgängerschutzes werden zur Zeit Kontaktsensoren entwickelt.

Erfindungsgemäß wird die Bestimmung der Relativgeschwindigkeit zum Aufprallzeitpunkt durch eine Kombination von Signalen einer Umfeldsensorik und einer Kontaktsensorik ermittelt. Als Umfeldsensorik kann insbesondere eine Long-Range-Radar (LRR), beispielsweise bei 77 GHz, oder eine Ultraschallsensorik verwendet werden, und als Kontaktsensor kann beispielsweise ein Piezokabel oder Schalter verwendet werden. Es sind jedoch auch andere Kontaktsensoren bekannt. Vorteilhafterweise wird durch die Verwendung des Kontaktsensors der Erfassungsbereich für die Bestimmung der Relativgeschwindigkeit erweitert. Die Verwendung eines Radarsensors, eines Ultraschallsensors und eines Kontaktsensors stellt eine lückenlose Verfolgung des Aufprallobjekts sicher. Gleichzeitig wird der Kontaktsensor als Plausibilitätssensor verwendet. Ingesamt führt die erfindungsgemäße Vorrichtung zu einer erhöhten Sicherheit der Fahrzeuginsassen.

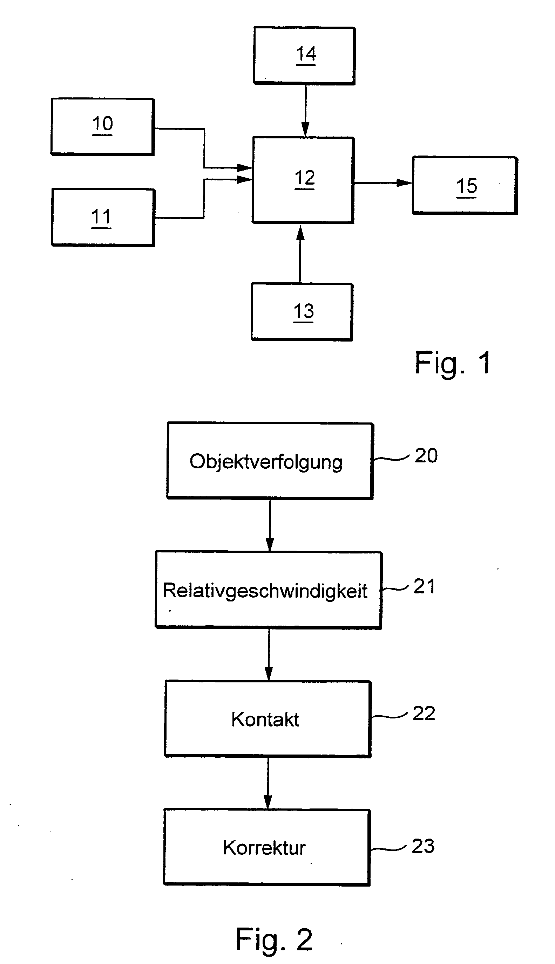

Figur 1 zeigt in einem Blockschaltbild die erfindungsgemäße Vorrichtung. Eine Umfeldsensorik 10 und eine Kontaktsensorik 11 sind jeweils an ein Steuergerät 12 zur Ansteuerung von Rückhaltemitteln angeschlossen. Die Umfeldsensorik 10 ist in der Fahrzeugfront angeordnet, wie auch die Kontaktsensorik 11. Es ist jedoch möglich, an anderen Stellen der Außenhaut des Fahrzeugs die Umfeldsensorik 10 und die Kontaktsensorik 11 zusätzlich oder anstatt anzuordnen. Die Umfeldsensorik 10 weist hier eine Radarsensorik, die Radarwellen bei 77 GHz ausstrahlt, auf. Solch ein Radarsensor ist insbesondere für die Fernüberwachung geeignet. Die Kontaktsensorik 11 weist hier beispielhaft ein Piezokabel auf, das in der Stoßstange des Fahrzeugs angeordnet ist und durch die Verwendung einer kapazitiven Messung, einer piezoelektrischen Messung und einer Widerstandsmessung ein inhärent zuverlässiger Sensor bei einem Aufprall ist. Zusätzlich kann die Umfeldsensorik 10 eine Ultraschallsensorik aufweisen. Es ist weiterhin möglich, dass die Umfeldsensorik 10 anstatt des Radarsensors nur die Ultraschallssensorik aufweist. Die Messsignale der Umfeldsensorik 10 werden verstärkt und digitalisiert und gegebenenfalls vorverarbeitet, beispielsweise um bereits die Relativgeschwindigkeit zu bestimmen. Dieses Signal wird dann an das Steuergerät 12 übertragen. Auch die Kontaktsensorik 11 liefert ein Kontaktsignal als ein digitales Signal an das Steuergerät 12. Es ist möglich, dass die Sensoren 10 und 11 an einem Bus angeordnet sind und derart mit dem Steuergerät 12 verbunden sind. Auch eine drahtlose Übertragung der Daten zwischen den Sensoren 10 und 11 und dem Steuergerät 12 ist hier möglich.

Das Steuergerät 12 verwendet die Relativgeschwindigkeit, die die Umfeldsensorik 10 bestimmt hat, oder bestimmt aus den Messdaten der Umfeldsensorik 10 selbst die Relativgeschwindigkeit zwischen dem Fahrzeug und dem Aufprallobjekt. Das Signal des Kontaktsensors 11 verwendet das Steuergerät 12, um die Bestimmung der Relativgeschwindigkeit zu korrigieren. Die Relativgeschwindigkeit wird dann zur Auswahl der Rückhaltemittel verwendet, bzw. sie geht in den Auslösealgorithmus ein, um beispielsweise die Schwelle, die die Auslösung der Rückhaltemittel bestimmt, oder auch das Signal, das mit den Auslöseschwellen verglichen wird, zu verändern. Damit kann also in Abhängigkeit von der Relativgeschwindigkeit der Airbagauslösealgorithmus verschärft oder abgeschwächt werden.

Die Rückhaltemittel steuert das Steuergerät 12 jedoch nicht nur in Abhängigkeit von den Signalen der Pre-Crash-Sensorik 10 und der Kontaktsensorik 11 an, sondern auch und insbesondere in Abhängigkeit von einer Crash-Sensorik 13, die vornehmlich Beschleunigungssensoren aufweist. Die Beschleunigungssensoren geben eine zusätzliche Information über die Crash-Schwere und den Crash-Verlauf. Die Beschleunigungssensoren können im Fahrzeug verteilt sein, beispielsweise an der Fahrzeugfront als Upfrontsensoren und in den Seiten, beispielsweise in der B-Säule des Fahrzeugs und auch im Steuergerät 12 selbst. Die Beschleunigungssensoren weisen unterschiedliche Empfmdlichkeitsachsen auf, um Beschleunigung in den verschiedenen Raumrichtungen zu erfassen. Auch Überrollvorgänge können so erfasst werden, wobei dann auch ein Drehraten- oder Drehwinkelsensor verwendet werden kann. Auch eine kinematische Sensorplattform kann hier die notwendigen Daten liefern. Es sind jedoch auch andere Crashsensoren wie ein Drucksensor zur Seitenaufprallsensierung möglich.

Darüber hinaus ist das Steuergerät 12 mit einer Innenraumsensorik 14 verbunden. Die Innenraumsensorik 14, beispielsweise eine Videoüberwachung oder eine Gewichtssensierung, gibt Auskunft über Anzahl und Art der Insassen. Insbesondere ist es mit der Innenraumsensorik 14 möglich, zwischen einer Sache und einer Person zu unterscheiden. Damit werden dann also nur die Rückhaltemittel angesteuert, die wirklich eine Person schützen. In Abhängigkeit von all diesen Signalen steuert dann das Steuergerät 12, das zur Auswertung dieser Signale einen Prozessor aufweist, die Rückhaltemittel 15 an. Die Rückhaltemittel 15 sind entweder hier über eine Punkt-zu-Punkt-Verbindung mit dem Steuergerät 12 verbunden oder über einen Bus. Bei den Rückhaltemitteln 15 handelt es sich vornehmlich um Airbags, wozu ein Fahrerairbag, Beifahrerairbag, Knieairbags, Windowairbags zählen, aber auch Überrollbügel und Gurtstraffer, wie auch insbesondere reversible Gurtstraffer und Sitzaktuatoren, um die Sitzposition des Insassen für den Aufprall zu verbessern.

In Figur 2 ist ein erstes Flussdiagramm dargestellt, das die Funktion der erfindungsgemäßen Vorrichtung illustriert. Im Verfahrensschritt 20 wird das Aufprallobjekt mittels der Umfeldsensorik 10 verfolgt. Damit und zwar mit den Daten der Unfallsensorik 10 wird im Verfahrensschritt 21 die Relativgeschwindigkeit dieses Objekts zum Fahrzeug bestimmt. Kommt es zu einem Kontakt also zu einem Aufprall des Objekts mit dem Fahrzeug wird dies im Verfahrensschritt 22 anhand der Kontaktsensorik 11 erfasst. Das Signal des Kontaktsensors wird zur Korrektur der Relativgeschwindigkeit im Verfahrensschritt 23 verwendet. Die so korrigierte Relativgeschwindigkeit kann dann im Auslösealgorithmus zur Bestimmung der Auslösezeit verwendet werden. Auch kann die Relativgeschwindigkeit zur Auswahl der Rückhaltemittel verwendet werden, da bei einem leichten Crash der Einsatz von Airbags nicht notwendigerweise angezeigt ist. Hier kann der Einsatz von Gurtstraffern ausreichend sein.

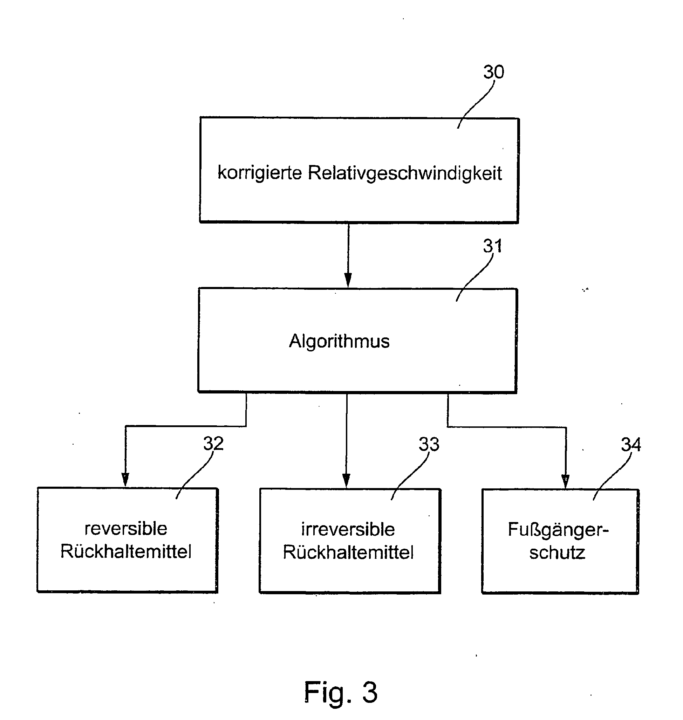

Figur 3 zeigt in einem weiteren Flussdiagramm, was mit der korrigierten Relativgeschwindigkeit gemacht werden kann. Im Verfahrensschritt 30 wird die korrigierte Relativgeschwindigkeit bereitgestellt. Diese wird im Verfahrensschritt 31 dem Algorithmus zugeführt, der die Auslösung der Rückhaltemittel steuert. Die Relativgeschwindigkeit kann beispielsweise als Parameter für die Unfallschwere herangezogen werden. Sie kann auch dazu herangezogen werden, die Auslöseschwellen zu verändern oder das Auslösesignal zu modifizieren, so dass es schneller oder langsamer zur Auslösung kommt. Weiterhin kann die Relativgeschwindigkeit dazu verwendet werden, die Rückhaltemittel auszuwählen, die ausgelöst werden sollen. Daher kann der Algorithmus 31 reversible Rückhaltemittel 32, irreversible Rückhaltemittel 33 und einen Fußgängerschutz 34 ansteuern.

## Patentansprüche

1. Vorrichtung zur Bestimmung einer Relativgeschwindigkeit zwischen einem Fahrzeug und einem Aufprallobjekt, wobei die Vorrichtung im Fahrzeug angeordnet ist, wobei die Vorrichtung wenigstens eine aktive Umfeldsensorik (10) und wenigstens eine Kontaktsensorik (11) aufweist, **dadurch gekennzeichnet, dass** die Vorrichtung derart konfiguriert ist, dass die Vorrichtung die Relativgeschwindigkeit anhand einer Kombination eines ersten Signals von der wenigstens einen Umfeldsensorik (10) und eines zweiten Signals von der wenigstens einen Kontaktsensorik (11) ermittelt.

2. Vorrichtung nach Anspruch 1, **dadurch gekennzeichnet, dass** die aktive Umfeldsensorik (10) eine Radarsensorik aufweist.

3. Vorrichtung nach Anspruch 1, **dadurch gekennzeichnet, dass** die aktive Umfeldsensorik (10) eine Lidarsensorik aufweist.

4. Vorrichtung nach Anspruch 1, **dadurch gekennzeichnet, dass** die aktive Umfeldsensorik (10) eine Videosensorik aufweist.

5. Vorrichtung nach Anspruch 1, **dadurch gekennzeichnet, dass** die aktive Umfeldsensorik (10) eine Ultraschallsensorik aufweist.

6. Vorrichtung nach Anspruch 1, **dadurch gekennzeichnet, dass** die aktive Umfeldsensorik (10) eine PMD-Sensorik aufweist.

7. Vorrichtung nach Anspruch 2, **dadurch gekennzeichnet, dass** die Radarsensorik ein Messsignal bei 77GHz erzeugt.

8. Vorrichtung nach einem der vorherigen Ansprüche, **dadurch gekennzeichnet, dass** die Kontaktsensorik (11) ein Piezokabel, das an der Fahrzeugaußenhaut angeordnet ist, aufweist.

9. Vorrichtung nach einem der Ansprüche 1-7, **dadurch gekennzeichnet, dass** die Kontaktsensorik (11) einen optischen Sensor aufweist.

10. Vorrichtung nach einem der Ansprüche 1-7, **dadurch gekennzeichnet, dass** die Kontaktsensorik (11) einen Beschleunigungssensor aufweist.

11. Vorrichtung nach einem der Ansprüche 1 bis 7, **dadurch gekennzeichnet, dass** die Kontaktsensorik (11) wenigstens einen Schalter aufweist.

12. Vorrichtung nach einem der vorherigen Ansprüche, **dadurch gekennzeichnet, dass** die Vorrichtung derart mit einer Aktuatorik gekoppelt ist, dass die Relativgeschwindigkeit bei der Ansteuerung der Aktuatorik verwendet wird.

13. Vorrichtung nach Anspruch 12, **dadurch gekennzeichnet, dass** die Aktuatorik reversible Rückhaltemittel aufweist.

14. Vorrichtung nach Anspruch 12, **dadurch gekennzeichnet, dass** die Aktuatorik einen Fußgängerschutz aufweist.

## Claims

1. Device for determining a relative speed between a vehicle and an impact object, the device being arranged in the vehicle, the device having at least one active surroundings sensor system (10) and at least one contact sensor system (11), **characterized in that** the device is configured in such a way that the device determines the relative speed with reference to a combination of a first signal from the at least one surroundings sensor system (10) and a second signal from the at least one contact sensor system (11).

2. Device according to Claim 1, **characterized in that** the active surroundings sensor system (10) has a radar sensor system.

3. Device according to Claim 1, **characterized in that** the active surroundings sensor system (10) has a lidar sensor system.

4. Device according to Claim 1, **characterized in that** the active surroundings sensor system (10) has a video sensor system.

5. Device according to Claim 1, **characterized in that** the active surroundings sensor system (10) has an ultrasonic sensor system.

6. Device according to Claim 1, **characterized in that** the active surroundings sensor system (10) has a PMD sensor system.

7. Device according to Claim 2, **characterized in that** the radar sensor system generates a measurement signal at 77 GHz.

8. Device according to one of the preceding claims, **characterized in that** the contact sensor system (11) has a piezocable which is arranged on the outer skin of the vehicle.

9. Device according to one of Claims 1-7, **characterized in that** the contact sensor system (11) has an optical sensor.

10. Device according to one of Claims 1-7, **characterized in that** the contact sensor system (11) has an acceleration sensor.

11. Device according to one of Claims 1 to 7, **characterized in that** the contact sensor system (11) has at least one switch.

12. Device according to one of the preceding claims, **characterized in that** the device is coupled to an actuator system in such a way that the relative speed is used when the actuator system is driven.

13. Device according to Claim 12, **characterized in that** the actuator system has reversible restraint means.

14. Device according to Claim 12, **characterized in that** the actuator system has a pedestrian protection.

## Revendications

1. Dispositif permettant de déterminer une vitesse relative entre un véhicule et un objet de collision, le dispositif étant disposé dans le véhicule et présentant au moins une détection environnementale active (10) et au moins une détection de contact (11),
**caractérisé en ce qu'**
il est configuré de manière à déterminer la vitesse relative à l'aide d'une combinaison d'un premier signal de la détection environnementale (10) et d'un deuxième signal de la détection de contact (11).

2. Dispositif selon la revendication 1,
**caractérisé en ce que**
la détection environnementale active (10) présente une détection radar.

3. Dispositif selon la revendication 1,
**caractérisé en ce que**
la détection environnementale active (10) présente une détection lidar.

4. Dispositif selon la revendication 1,
**caractérisé en ce que**
la détection environnementale active (10) présente une détection vidéo.

5. Dispositif selon la revendication 1,
**caractérisé en ce que**
la détection environnementale active (10) présente une détection à ultrasons.

6. Dispositif selon la revendication 1,
**caractérisé en ce que**
la détection environnementale active (10) présente une détection PMD.

7. Dispositif selon la revendication 2,
**caractérisé en ce que**
la détection radar produit un signal de mesure à 77 GHz.

8. Dispositif selon l'une quelconque des revendications précédentes,
**caractérisé en ce que**
la détection de contact (11) présente un câble piézoélectrique monté sur la carrosserie externe.

9. Dispositif selon l'une quelconque des revendications 1 à 7,
**caractérisé en ce que**
la détection de contact (11) présente un capteur optique.

10. Dispositif selon l'une quelconque des revendications 1 à 7,
**caractérisé en ce que**
la détection de contact (11) présente un capteur d'accélération.

11. Dispositif selon l'une quelconque des revendications 1 à 7,
**caractérisé en ce que**
la détection de contact (11) présente au moins un commutateur.

12. Dispositif selon l'une quelconque des revendications précédentes,
**caractérisé en ce que**
le dispositif est couplé à un actionneur de manière à utiliser la vitesse relative lors de la commande de l'actionneur.

13. Dispositif selon la revendication 12,
**caractérisé en ce que**
l'actionneur présente des moyens de retenue réversibles.

14. Dispositif selon la revendication 12,
**caractérisé en ce que**
l'actionneur présente une protection piétons.
